(19) Europäisches Patentamt
European Patent Office
Office européen des brevets

(11) EP 2 582 451 B1

(12) **FASCICULE DE BREVET EUROPEEN**

(45) Date de publication et mention de la délivrance du brevet:
**15.02.2017 Bulletin 2017/07**

(21) Numéro de dépôt: **11730600.1**

(22) Date de dépôt: **15.06.2011**

(51) Int Cl.:
***B01D 69/12*** *(2006.01)*

(86) Numéro de dépôt international:
**PCT/EP2011/059882**

(87) Numéro de publication internationale:
**WO 2011/157727 (22.12.2011 Gazette 2011/51)**

(54) **PROCEDE DE PREPARATION D'UN MATERIAU COMPOSITE COMPRENANT UNE MATRICE POLYMERIQUE ET UNE CHARGE CONSISTANT EN DES PARTICULES INORGANIQUES ECHANGEUSES D'IONS**

VERFAHREN ZUR HERSTELLUNG EINES VERBUNDSTOFFES MIT EINER POLYMERMATRIX UND EINEM FÜLLER AUS ANORGANISCHEN IONENAUSTAUSCHPARTIKELN

METHOD FOR PREPARING A COMPOSITE MATERIAL COMPRISING A POLYMER MATRIX AND A FILLER CONSISTING OF INORGANIC ION-EXCHANGE PARTICLES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.06.2010 FR 1054735**

(43) Date de publication de la demande:
**24.04.2013 Bulletin 2013/17**

(73) Titulaires:
- **Commissariat à l'Énergie Atomique et aux Énergies Alternatives 75015 Paris (FR)**
- **Institut National Des Sciences Appliquees 69621 Villeurbanne Cedex (FR)**

(72) Inventeurs:
- **BUVAT, Pierrick F-37250 Montbazon (FR)**
- **MAZABRAUD, Philippe F-45000 Orleans (FR)**
- **GALIANO, Hervé F-37700 La Ville aux Dames (FR)**
- **BIGARRE, Jannick F-37000 Tours (FR)**
- **BOUNOR-LEGARE, Véronique F-69006 Lyon (FR)**
- **NIEPCERON, Frédérick F-38300 BOURGOIN-JALLIEU (FR)**
- **GERARD, Jean-François F-69500 Bron (FR)**

(74) Mandataire: **Ilgart, Jean-Christophe et al BREVALEX 95, rue d'Amsterdam 75378 Paris Cedex 8 (FR)**

(56) Documents cités:
**FR-A1- 2 928 920 US-A1- 2004 126 638**

EP 2 582 451 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### DOMAINE TECHNIQUE

La présente invention a trait à un procédé de préparation d'un matériau composite échangeur d'ions comprenant une matrice polymérique et une charge consistant en des particules inorganiques échangeuses d'ions.

Ces matériaux préparés selon le procédé de l'invention peuvent trouver une application dans les domaines nécessitant un échange d'ions, comme cela est le cas de la purification d'effluents et de l'électrochimie.

En particulier, ces matériaux composites peuvent trouver leur application dans la conception des membranes de piles à combustible, telles que des membranes conductrices de protons pour des piles à combustible fonctionnant avec $H_2$/air ou $H_2/O_2$ (ces piles étant connues sous l'abréviation PEMFC pour « Proton Exchange Membrane Fuel Cell ») ou fonctionnant au méthanol/air (ces piles étant connues sous l'abréviation DMFC pour « Direct Methanol Fuel Cell »).

Un des domaines techniques généraux de l'invention peut être ainsi défini comme étant celui des piles à combustible et des membranes conductrices de protons.

### ÉTAT DE LA TECHNIQUE ANTÉRIEURE

Une pile à combustible est un générateur électrochimique, qui convertit l'énergie chimique d'une réaction d'oxydation d'un combustible en présence d'un comburant en énergie électrique.

Généralement, une pile à combustible comporte une pluralité de cellules électrochimiques montées en série, chaque cellule comprenant deux électrodes de polarité opposée séparées par une membrane échangeuse de protons faisant office d'électrolyte solide.

La membrane assure le passage vers la cathode des protons formés lors de l'oxydation du combustible à l'anode.

Les membranes structurent le coeur de la pile et doivent, par conséquent, présenter de bonnes performances en matière de conduction protonique, ainsi qu'une faible perméabilité aux gaz réactants ($H_2$/air ou $H_2/O_2$ pour les piles PEMFC et méthanol/air pour les piles DMFC). Les propriétés des matériaux constituant les membranes sont essentiellement la stabilité thermique, la résistance à l'hydrolyse et à l'oxydation ainsi qu'une certaine flexibilité mécanique.

Des membranes utilisées couramment et remplissant ces exigences sont des membranes obtenues à partir de polymères appartenant, par exemple, à la famille des polysulfones, des polyéthercétones, des polyphénylènes. Toutefois, il a été constaté, que ces polymères non fluorés se dégradent relativement rapidement dans un environnement de pile à combustible et leur durée de vie reste, pour le moment, insuffisante pour l'application PEMFC.

Des membranes présentant des propriétés plus importantes en matière de durée de vie sont des membranes obtenues à partir de polymères constitués d'une chaîne principale linéaire perfluorée et de chaînes latérales porteurs d'un groupe acide, tel que des groupes acide sulfonique. Parmi les plus connues, on peut citer les membranes commercialisées sous la dénomination NAFION® par la société Dupont de Nemours ou sous la dénomination Dow®, FLEMION® ou Aciplex par les sociétés Dow Chemicals et Asahi Glass. Ces membranes présentent de bonnes performances électrochimiques et une durée de vie intéressante mais néanmoins insuffisante pour les applications PEMFC. De plus, leur coût (plus de 500 euros/$m^2$) reste prohibitif pour la commercialisation. Pour les applications DMFC, elles présentent une perméabilité au méthanol élevée, ce qui limite également leur utilisation avec ce type de combustible. Qui plus est, les monomères les constituant présentent une structure de type hydrophile/hydrophobe, qui les rend particulièrement sensibles aux phénomènes d'hydratation et de déshydratation. Ainsi, leur température de fonctionnement se situe typiquement vers 80°C, puisque au-delà les instabilités d'hydratation vieillissent prématurément les membranes.

Pour obtenir une efficacité à long terme en en matière de conduction protonique à des températures supérieures à 80°C, certains auteurs ont axé leur recherche sur la conception de matériaux plus complexes comprenant en plus d'une matrice polymérique des particules conductrices de protons, la conductivité n'étant ainsi plus uniquement dévolue au(x) polymère(s) constitutif(s) des membranes. De ce fait, il est ainsi possible d'utiliser un plus large panel de polymères pour entrer dans la constitution de la membrane.

C'est le cas de la demande internationale WO 2009/000797, qui décrit des matériaux composites comprenant une matrice polymérique et une charge consistant en des particules inorganiques, telles que des particules d'argile, greffées par des groupes échangeurs d'ions.

Classiquement, ces matériaux sont préparés par deux grandes voies de synthèse : la voie utilisant un solvant et la voie mettant en jeu des éléments (en l'occurrence, ici, polymère et particules) à l'état fondu (appelée, par la suite, voie fondue).

La voie utilisant un solvant consiste à mettre en contact le polymère et les particules inorganiques dans un solvant. Le mélange résultant est ensuite coulé par enduction sur un substrat puis le solvant est laissé à évaporer.

Cette voie de synthèse présente l'avantage d'être très simple d'utilisation et de ne pas nécessiter d'appareillage sophistiqué. Toutefois, lorsqu'elle est destinée à être mise en oeuvre à grande échelle, cette voie pose des difficultés de gestion quant aux volumes de solvant utilisé et des problèmes de sécurité inhérents aux vapeurs de solvant qui

peuvent être nocives voire cancérigènes. Quant au matériau composite obtenu, il est difficile d'obtenir une bonne densité de ce dernier, lié notamment au phénomène d'évaporation de solvant qui engendre une structure de matériau difficile à contrôler.

La voie fondue consiste, quant à elle, en la transformation des éléments précurseurs du matériau composite (à savoir, le ou les polymères et les particules) initialement solides en mélange fondu. Pour ce faire, les particules sont classiquement introduites par dispersion mécanique dans le polymère fondu. Toutefois, cette technique présente, entre autres, la difficulté d'obtenir une dispersion fine et homogène des particules inorganiques dans le ou les polymères susmentionnés. Il s'ensuit ainsi un matériau présentant des propriétés échangeuses d'ions non uniformes, notamment en raison de la concentration de particules par percolation à certains endroits du matériau final obtenu.

Qui plus est, que ce soit par la voie solvant ou la voie fondue, il est difficile d'obtenir des matériaux présentant une forte proportion de particules inorganiques échangeuses d'ions dans la matrice polymérique.

Ainsi il existe un véritable besoin pour un procédé de préparation d'un matériau composite comprenant, dans une matrice, une dispersion de particules inorganiques échangeuses d'ions, pouvant être mis en oeuvre, par exemple, pour la conception de membranes échangeuses de protons de pile à combustible, qui permettrait, entre autres :

- d'obtenir, dans le matériau résultant, une distribution homogène des particules dans la matrice polymérique et, ainsi, une homogénéité quant aux propriétés échangeuses d'ions ;
- d'obtenir, dans le matériau résultant, lorsque cela est souhaité, d'importantes proportions de particules inorganiques échangeuses d'ions dans la matrice polymérique.

## EXPOSÉ DE L'INVENTION

Pour palier les inconvénients susmentionnés, les inventeurs ont mis au point un procédé innovant et inventif de synthèse d'un matériau composite dont les propriétés échangeuses d'ions sont conférées en tout ou partie par des particules inorganiques.

L'invention a ainsi trait à un procédé de préparation d'un matériau composite comprenant une matrice polymérique et une charge consistant en des particules inorganiques échangeuses d'ions comprenant une étape de synthèse *in situ* desdites particules au sein de la matrice polymérique.

En procédant de la sorte, l'on s'affranchit des inconvénients suivants :

- les problèmes de mélange entre les particules inorganiques et le ou les polymères constitutifs de la matrice polymérique ;
- les problèmes de répartition inhomogène de ces particules au sein du ou des polymères ;
- les problèmes d'anisotropie quant aux propriétés échangeuses d'ions rencontrées dans les modes de réalisation de l'art antérieur, du fait des problèmes de mélange et de répartition,

ces problèmes étant résolus par le fait que les particules sont générées *in situ* au sein de la matrice.

Avant d'entrer plus en détail, on précise les définitions suivantes.

Par «étape de synthèse *in situ*», on entend une étape de synthèse réalisée au sein même de la matrice polymérique, ce qui signifie en d'autres termes que les particules inorganiques ne préexistent pas en dehors de la matrice polymérique.

Par particules inorganiques échangeuses d'ions, on entend des particules inorganiques à la surface desquelles sont liés un ou plusieurs groupes organiques échangeurs d'ions.

Il peut s'agir de particules d'oxyde fonctionnalisées par des groupes échangeurs d'ions, telles que des particules de silice fonctionnalisées par des groupes échangeurs d'ions.

L'étape de synthèse *in situ* des particules inorganiques peut être réalisée par la méthode sol-gel, c'est-à-dire que des précurseurs desdites particules subissent une opération d'hydrolyse-condensation au sein même du matériau.

Selon une première variante, l'étape de synthèse peut comprendre les opérations suivantes :

- une opération de mise en contact du ou des polymères constitutifs de la matrice avec un ou plusieurs précurseurs des particules inorganiques, le ou lesdits précurseurs répondant à la formule suivante :

$$(X)_{y-n}\text{-M-}(R)_n$$

dans laquelle :

*M est un élément métallique ou un élément métalloïde ;
*X est un groupe chimique hydrolysable ;

*R est un groupe chimique échangeur d'ions ou un groupe précurseur d'un groupe chimique échangeur d'ions ;
*y correspond à la valence de l'élément M ; et
*n est un entier allant de 0 à (y-1) ;

- une opération d'hydrolyse-condensation du ou desdits précurseurs, moyennant quoi l'on obtient des particules inorganiques résultant de l'hydrolyse-condensation desdits précurseurs ;
- dans le cas où R est un groupe précurseur d'un groupe chimique échangeur d'ions, une opération de transformation du groupe précurseur en un groupe chimique échangeur d'ions ou, dans le cas où n=0, une opération de fonctionnalisation desdites particules par des groupes chimiques échangeurs d'ions.

L'opération d'hydrolyse-condensation peut consister à chauffer le mélange issu de l'étape de mise en contact à une température efficace, par exemple, à une température allant de 150 à 300°C pour engendrer ladite opération d'hydrolyse-condensation, éventuellement en présence d'un catalyseur.
L'étape de synthèse *in situ* réalisée selon la première variante présente les avantages suivants :

- une bonne miscibilité entre les précurseurs et le ou les polymères constitutifs de la matrice, ce qui permet, au final, si souhaité, d'accéder à de fortes proportions de particules inorganiques dans la matrice ;
- l'absence d'utilisation de solvants organiques, classiquement utilisés dans les procédés de préparation des matériaux composites du type de l'invention, ce qui permet de s'affranchir des problèmes récurrents de toxicité et de porosité inhérents à l'utilisation de solvant organique.

Pour éviter l'utilisation d'un catalyseur et les problèmes pouvant être engendrés par une mauvaise dispersion de ce catalyseur lors de l'étape de mise en contact, il est proposé, selon l'invention, de réaliser l'étape de synthèse *in situ* des particules inorganiques, selon une deuxième variante, laquelle étape est réalisée par une méthode sol-gel comprenant les opérations suivantes :

- une opération d'hydrolyse d'un ou plusieurs précurseurs de particules inorganiques de formule suivante :

$$(X)_{y-n}\text{-M-}(R)_n$$

dans laquelle :

*M est un élément métallique ou un élément métalloïde ;
*X est un groupe chimique hydrolysable ;
*R est un groupe chimique échangeur d'ions ou un groupe précurseur d'un groupe chimique échangeur d'ions ;
*y correspond à la valence de l'élément M ; et
*n est un entier allant de 0 à (y-1) ;

- une opération de mise en contact de l'hydrolysat obtenu à l'étape précédente avec le ou les polymères constitutifs de la matrice ;
- une opération de chauffage du mélange résultant à une température efficace pour engendrer une transformation de l'hydrolysat en particules inorganiques ;
- dans le cas où R est un groupe précurseur d'un groupe chimique échangeur d'ions, une opération de transformation du groupe précurseur en un groupe chimique échangeur d'ions ou, dans le cas où n=0, une opération de fonctionnalisation desdites particules par des groupes chimiques échangeurs d'ions.

L'opération d'hydrolyse susmentionnée peut consister à mettre en contact lesdits précurseurs avec une solution aqueuse acide comprenant éventuellement un ou plusieurs solvants alcooliques.
Ainsi, à titre d'exemple, on peut mettre en contact lesdits précurseurs avec une quantité d'eau, de sorte à atteindre un rapport molaire entre les fonctions hydrolysables des précurseurs et le nombre de moles d'eau compris généralement entre 0,001 et 1000, de préférence entre 0,1 et 10.
L'addition d'eau peut conduire, en fonction des précurseurs utilisés, à une démixtion de phases du fait d'un problème de miscibilité entre l'eau et les précurseurs. Ainsi, il peut être utile d'ajouter un solvant alcoolique en des proportions déterminées (par exemple, du méthanol, de l'éthanol, du propanol), afin d'améliorer la miscibilité des précurseurs dans l'eau. Généralement, le solvant alcoolique peut être ajouté en respectant un rapport massique avec l'eau allant jusqu'à 100, en particulier étant compris entre 0 et 1. Qui plus est, pour activer l'hydrolyse, il peut être avantageux d'acidifier la solution, de sorte à obtenir une solution résultante présentant, avantageusement, un pH inférieur à 2. Cette acidification peut être réalisée par l'ajout à la solution d'un acide, tel que l'acide chlorhydrique, l'acide sulfurique, l'acide

nitrique ou un acide organique.

Une fois l'opération d'hydrolyse effectuée, l'hydrolysat est ajouté au(x) polymère(s) destiné(s) à constituer la matrice polymérique suivi d'une opération de chauffage à une température efficace pour transformer l'hydrolysat en particules inorganiques.

Cette température peut être aisément déterminée par l'homme du métier en pratiquant des essais à différentes températures jusqu'à trouver une température à laquelle l'hydrolysat donne naissance à des particules inorganiques.

Que ce soit pour la première variante ou la seconde variante, l'élément métallique M peut être choisi dans un groupe constitué par les métaux de transition, les métaux lanthanides et les métaux dits post-transitionnels des colonnes IIIA et IVA de la classification périodique des éléments. En particulier, l'élément métallique de transition peut être choisi parmi Ti, V, Cr, Mn, Fe, Co, Ni, Cu, Zn, Y, Zr, Nb, Mo, Ru, Rh, Pd, Ag, Cd, Hf, Ta, W, Re, Os, Ir, Pt). En particulier, l'élément lanthanide peut être choisi parmi La, Ce, Pr, Nd, Sm, Eu, Gd, Tb, Dy, Er, Yb. En particulier, l'élément métallique post-transitionnel peut être choisi parmi les éléments de la colonne IIIA de la classification périodique, tels Al, Ga, In et Tl et les éléments de la colonne IVA de la classification périodique, tels Ge, Sn et Pb.

L'élément métalloïde M peut être choisi parmi Si, Se, Te.

Avantageusement, M peut être un élément choisi parmi Si, Ti et Al, en particulier, Si.

Le groupe X hydrolysable doit être, avantageusement, un bon groupe partant lors de l'opération d'hydrolyse-condensation mentionnée ci-dessus.

Ce groupe X peut être, par exemple, un atome d'halogène, un groupe acrylate, un groupe acétonate, un groupe alcoolate de formule -OR', un groupe amine secondaire ou tertiaire, dans laquelle R' représente un groupe alkyle comprenant, par exemple, de 1 à 10 atomes de carbone, en particulier, un groupe éthyle.

De préférence, X est un groupe -OR' tel que défini ci-dessus, ou un atome d'halogène.

Lorsque le groupe R est un groupe chimique échangeur d'ions, il peut s'agir d'un groupe chimique échangeur de cations (par exemple, échangeur de protons) ou d'un groupe chimique échangeur d'anions.

Le groupe R peut être un groupe de formule $-R^2-Z$, dans laquelle $R^2$ est une liaison simple, un groupe alkylène, linéaire ou ramifié, comprenant de 1 à 30 atomes de carbone, de préférence de 1 à 10 atomes de carbone ou un groupe hydrocarboné cyclique, et Z est un groupe chimique échangeur d'ions.

En particulier, lorsqu'il est un groupe échangeur de cations, le groupe R peut être un groupe de formule $-R^2-Z^1$, dans laquelle :

- $R^2$ est une liaison simple, un groupe alkylène, linéaire ou ramifié, comprenant, par exemple, de 1 à 30 atomes de carbone, de préférence de 1 à 10 atomes de carbone ou un groupe hydrocarboné cyclique, tel qu'un groupe aromatique ou hétérocyclique ;
- $Z^1$ est un groupe $-SO_3H$, $-PO_3H_2$, $-CO_2H$, éventuellement sous forme de sels.

On précise que, par sel, on entend classique un groupe $-SO_3X$, $-PO_3X_2$ ou $-CO_2X$ où X représente un cation.

Lorsqu'il est un groupe échangeur d'anions, le groupe R peut être un groupe de formule $-R^2-Z^2$, dans laquelle :

- $R^2$ est une liaison simple, un groupe alkylène, linéaire ou ramifié, comprenant, par exemple, de 1 à 30 atomes de carbone, de préférence de 1 à 10 atomes de carbone ou un groupe hydrocarboné cyclique, tel qu'un groupe aromatique ou hétérocyclique ;
- $Z^2$ est un groupe amine, un groupe phosphonium ou un groupe sulfonium.

On précise que, par groupe phosphonium, on entend classiquement un groupe comprenant un atome de phosphore chargé positivement, ce groupe pouvant être issu de la réaction d'un composé phosphine (tel que la triphénylphosphine) avec un halogénure d'alkyle ou un alcool benzylique.

On précise que, par groupe sulfonium, on entend classiquement un groupe comprenant un atome de soufre chargé positivement, ce groupe pouvant être issu de la réaction d'un composé thioester avec un halogénure d'alkyle.

Il est précisé ci-dessus que le groupe R peut être également un groupe chimique précurseur d'un groupe échangeur d'ions.

Par groupe chimique précurseur d'un groupe échangeur d'ions, on entend classiquement un groupe apte à être transformé par une réaction chimique appropriée en ledit groupe échangeur d'ions.

Un tel groupe R peut être un groupe de formule $-R^2-Z^3$, dans laquelle :

- $R^2$ est une liaison simple, un groupe alkylène, linéaire ou ramifié, comprenant, par exemple, de 1 à 30 atomes de carbone, de préférence de 1 à 10 atomes de carbone ou un groupe hydrocarboné cyclique, par exemple, un groupe aromatique ou hétérocyclique ;
- $Z^3$ est un groupe précurseur d'un groupe $Z^1$ ou $Z^2$ tel que mentionné ci-dessus.

Lorsque l'on utilise un précurseur de ce type (à savoir un précurseur comprenant un groupe précurseur d'un groupe échangeur d'ions), il est nécessaire d'engager une opération de transformation du groupe précurseur en un groupe chimique échangeur d'ions.
Ainsi, lorsque le groupe $Z^1$ est un groupe $-SO_3H$ éventuellement sous forme de sel, le groupe $-Z^3$ peut être un groupe thiol -SH, qui va subir une opération de transformation consistant à le soumettre à une oxydation par de l'eau oxygénée suivie d'une acidification par de l'acide sulfurique concentré.
Lorsque le groupe $Z^1$ est un groupe $-CO_2H$ éventuellement sous forme de sel, le groupe $-Z^3$ peut être un groupe ester ou un groupe chlorure d'acide susceptible d'être transformé en groupe $-CO_2H$ éventuellement sous forme de sel par hydrolyse.
Les précurseurs susmentionnés peuvent être avantageusement des alcoxysilanes ou halogénosilanes (auquel cas M est Si et X est un groupe -OR' ou un atome d'halogène) comprenant au moins un groupe R tel que défini ci-dessus.
Des précurseurs répondant à cette spécificité peuvent être ainsi des précurseurs répondant à la formule suivante :

$$(OR')_{4-n}\text{-Si-}(R)_n$$

dans laquelle :

- R' est tel que défini ci-dessus ;
- R correspond à la formule $-R^2-Z^3$, $R^2$ étant un groupe alkylène, linéaire ou ramifié, comprenant de 1 à 30 atomes de carbone, de préférence de 1 à 10 atomes de carbone, et $Z^3$ étant un groupe précurseur d'un groupe $Z^1$ ou $Z^2$ tel que mentionné ci-dessus ;
- n est un entier allant de 1 à 3.

Par exemple, $Z^3$ peut être un groupe thiol.
On peut citer, à titre d'exemple, le mercaptopropyltriéthoxysilane de formule $HS-(CH_2)_3-Si(OCH_2CH_3)_3$.
Lorsque, pour les précurseurs susmentionnés, n est égal à 0, il est nécessaire, en fin de procédé, de réaliser une opération de fonctionnalisation desdites particules par introduction sur lesdites particules de groupes chimiques échangeurs d'ions.
Les réactions appropriées de fonctionnalisation seront choisies par l'homme du métier en fonction du matériau obtenu et désiré. Il peut s'agir, par exemple, de réactions de substitution sur des noyaux aromatiques, d'additions sur des liaisons insaturées, d'oxydation de groupes oxydables, la résultante de ces réactions ayant pour conséquence le greffage par covalence aux particules de groupes échangeurs d'ions.
Les précurseurs susmentionnés peuvent être utilisés en combinaison avec un précondensat comprenant des unités répétitives de formule suivante :

$$\left(\text{—}M(X)_{y-2}\text{—}\right)$$

dans laquelle :

- M est un élément métallique ou métalloïde tel que défini ci-dessus ;
- X est un groupe tel que défini ci-dessus ;
- y correspond à la valence de l'élément métallique ou métalloïde.

En particulier, X peut correspondre à un groupe -OR' avec R' étant tel que défini ci-dessus.
A titre d'exemple, il peut s'agir ainsi d'un précondensat de tétraméthoxysilane comprenant des unités répétitives de formule suivante :

$$\left(\text{—}Si(OCH_3)_2\text{—}\right)$$

ou encore d'un précondensat de tétrapropoxysilane.
Les précondensats peuvent permettre d'assurer la structuration des particules inorganiques, par exemple en

augmentant leur cohésion.

Les taux massiques entre les précurseurs susmentionnés et les précondensats seront adaptés de manière à obtenir le meilleur compromis entre structuration et fonctionnalisation.

A titre d'exemple, le rapport massique (précurseur/précondensat) peut être compris entre 0,01 et 50 et plus généralement entre 0,1 et 20.

Quel que soit le mode de réalisation mis en oeuvre, le ou les polymères constitutifs de la matrice sont, avantageusement, des polymères thermofusibles, en particulier lorsque l'étape de synthèse est réalisée par extrusion. Par exemple, les polymères peuvent présenter, avantageusement une température de transition vitreuse ou une température de fusion allant classiquement de 100 à 350°C.

En particulier, le ou les polymères destinés à constituer la matrice peuvent être choisis parmi les polymères thermoplastiques, tels que les polymères thermoplastiques fluorés.

Il peut s'agir notamment de polymères thermoplastiques fluorés non échangeurs d'ions, tels qu'un (co)polymère comprenant au moins un type d'unités répétitives issues d'un monomère fluoré, par exemple, les polytétrafluoréthylènes (connu sous l'abréviation PTFE), les polyfluorures de vinylidène (connu sous l'abréviation PVDF), les copolymères d'éthylène fluorépropylène (connu sous l'abréviation FEP), les copolymères d'éthylène et de tétrafluoroéthylène (connu sous l'abréviation ETFE) ou tels qu'un copolymère comprenant au moins deux types d'unités répétitives issues de monomères fluorés, par exemple un copolymère de fluorure de vinylidène et d'hexafluoropropène (connu sous l'abréviation PVDF-HFP), et les mélanges de ceux-ci.

Il peut s'agir également de polymères thermoplastiques fluorés échangeurs d'ions, tels que des polymères perfluorés sulfonés. On précise que, par polymères perfluorés sulfonés, on entend des polymères comprenant une chaîne principale linéaire perfluorée et des chaînes latérales porteurs de groupements acide sulfonique. De tels polymères sont notamment disponibles dans le commerce sous la marque déposée NAFION® par la société Dupont de Nemours, ou ACIPLEX-S® de la société Asahi Chemical.

Les polymères fluorés, du fait de la présence de liaisons -C-F stables (avec une énergie de liaison de 485 kJ/mol), constituent des polymères présentant d'excellentes propriétés et caractéristiques, telles que l'anti-adhérence, la résistance à l'abrasion, la résistance à la corrosion, la résistance aux attaques chimiques et à la température.

Avantageusement, le procédé de l'invention peut être mis en oeuvre avec un polymère du type PVDF-HFP intéressant pour la stabilité de son squelette fluoré, son faible coût de production.

Le rapport massique des précurseurs susmentionnées (éventuellement en combinaison avec au moins un précondensat tel que défini ci-dessus) par rapport au(x) polymère(s) constitutif(s) de la matrice peut aller jusqu'à 80%, avantageusement de 5 à 50%.

Que ce soit pour la première variante et la deuxième variante, l'étape de synthèse *in situ* des particules peut être réalisée par extrusion du ou des polymères destinés à constituer la matrice et des précurseurs susmentionnés, éventuellement en présence d'un précondensat tel que défini ci-dessus (pour la première variante) ou de l'hydrolysat (pour la deuxième variante), ce qui signifie que l'opération de mise en contact et l'opération de chauffage (selon la première variante et la deuxième variante) ont lieu au sein d'une extrudeuse, les autres opérations pouvant être réalisées en dehors de l'extrudeuse.

Ainsi, dans ce cas de figure, le ou les polymères constitutifs et les précurseurs, éventuellement en présence d'un précondensat tel que défini ci-dessus (selon la première variante) ou l'hydrolysat (selon la deuxième variante) sont introduits, de préférence, simultanément, par au moins une entrée d'une extrudeuse, où ils sont mélangés intimement (ce qui constitue l'étape de mise en contact susmentionnée). Le ou les polymères peuvent être introduits sous forme de poudres, de copeaux ou de granulés, cette dernière forme étant la forme préférée pour des raisons de facilité de manipulation et d'approvisionnement. Le mélange ainsi constitué migre ensuite dans l'extrudeuse jusqu'à atteindre l'extrémité de celle-ci.

La formation des particules inorganiques via les précurseurs ou l'hydrolysat est réalisée lors du séjour du mélange dans l'extrudeuse par chauffage à une température appropriée.

Les conditions opératoires de l'extrusion, telles que le profil de vis, le temps de résidence du mélange, la vitesse de rotation de vis seront fixées par l'homme du métier en fonction de la morphologie souhaitée du matériau final et de dispersion recherchée de particules inorganiques dans la matrice polymérique.

A titre d'exemple, l'extrusion peut être réalisée avantageusement avec les conditions opératoires suivantes :

- un profil de vis du type bis-vis interpénétrée co-rotative ;
- un temps de résidence du mélange susmentionné compris entre 0,1 minute et 120 minutes, de préférence, de 2 à 30 minutes ;
- une vitesse de rotation de la vis comprise entre 5 et 1000 tours/minute, de préférence entre 50 et 200 tours/min ;
- une température du mélange allant de 150 à 350°C, de préférence de 180 à 250°C.

L'extrudeuse peut être équipée d'une filière plate, permettant l'obtention de films pouvant présenter une épaisseur allant de 5 à 500 µm ou encore d'une filière dite « filière jonc » permettant l'obtention de joncs ou éventuellement de granulés, si les joncs sont amenés à être cisaillés.

A titre d'exemple, un procédé particulier de l'invention consiste en un procédé de synthèse d'un matériau composite comprenant une matrice polymérique et une charge consistant en des particules d'oxyde, telle que de la silice, comprenant des groupes échangeurs d'ions de formule $-R^2-Z^1$ telle que définie ci-dessus comprenant les opérations suivantes :

- une opération de mise en contact, dans une extrudeuse, d'un ou plusieurs polymères fluorés constitutifs de la matrice polymérique avec un ou plusieurs précurseurs des particules inorganiques susmentionnées, le ou lesdits précurseurs répondant à la formule suivante :

  $$(X)_{y-n}\text{-M-}(R)_n$$

  dans laquelle :

  *M est un élément métallique ou un élément métalloïde ;
  *X est un groupe chimique hydrolysable ;
  *R est un groupe de formule $-R^2-Z^3$ telle que définie ci-dessus;
  *y correspond à la valence du groupe M ; et
  *n est un entier allant de 0 à (y-1) ;

  ledit ou lesdits précurseurs étant utilisés en association avec un précondensat de formule :

  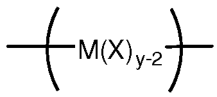

  M, X et y étant tels que définis ci-dessus ;
- une opération d'hydrolyse-condensation, dans l'extrudeuse, du ou desdits précurseurs en association avec ledit précondensat, moyennant quoi l'on obtient des particules inorganiques résultant de l'hydrolyse-condensation desdits précurseurs et dudit précondensat ;
- une opération de transformation du groupe $Z^3$ susmentionné en un groupe chimique échangeur d'ions $Z^1$.

Par exemple, le précurseur peut être un précurseur de formule suivante :

$$(OR')_{4-n}\text{-Si-}(R)_n$$

dans laquelle :

- R' est tel que défini ci-dessus ;
- R correspond à la formule $-R^2-Z^3$, $R^2$ étant un groupe alkylène comprenant de 1 à 30 atome de carbone, de préférence de 1 à 10 atomes de carbone, et $Z^3$ étant un groupe précurseur d'un groupe $Z^1$ ou $Z^2$ tel que mentionné ci-dessus ;
- n est un entier allant de 1 à 3.

Un précurseur répondant à cette définition donnée ci-dessus peut être le mercaptopropyltriéthoxysilane de formule $HS-(CH_2)_3-Si(OCH_2CH_3)_3$ et le précondensat est un précondensat pour lequel M est Si et X est un groupe -OR', R' étant tel que défini ci-dessus, tel qu'un précondensat du type polytétraméthoxysilane.

Le polymère fluoré peut être un copolymère de fluorure de vinylidène et d'hexafluoropropène.

A titre d'exemple, un procédé particulier de l'invention consiste en un procédé de synthèse d'un matériau composite comprenant une matrice polymérique et une charge consistant en des particules d'oxyde, telle que de la silice, comprenant des groupes échangeurs d'ions de formule $-R^2-Z^1$ telle que définie ci-dessus, comprenant les opérations suivantes :

- une opération d'hydrolyse d'un ou plusieurs précurseurs des particules inorganiques de formule suivante :

  $$(X)_{y-n}\text{-M-}(R)_n$$

*M est un élément métallique ou un élément métalloïde ;
*X est un groupe chimique hydrolysable ;
*R est un groupe de formule $-R^2-Z^3$ telle que définie ci-dessus;
*y correspond à la valence du groupe M ; et
*n est un entier allant de 0 à (y-1) ;

ledit ou lesdits précurseurs étant utilisés en association avec un précondensat de formule :

$$-\!\left(M(X)_{y-2}\right)\!-$$

M, X et y étant tels que définis ci-dessus ;

- une opération de mise en contact, dans une extrudeuse, de l'hydrolysat obtenu à l'étape précédente avec un ou plusieurs polymères fluorés destinés à entrer dans la constitution de la matrice ;
- une opération de chauffage du mélange résultant à une température efficace pour engendrer une transformation de l'hydrolysat en particules inorganiques ;
- une opération de transformation du groupe $Z^3$ susmentionné en un groupe chimique échangeur d'ions $Z^1$.

Par exemple, le précurseur peut être un présurseur de formule suivante :

$$(OR')_{4-n}-Si-(R)_n$$

dans laquelle :

- R' est tel que défini ci-dessus ;
- R correspond à la formule $-R^2-Z^3$, $R^2$ étant un groupe alkylène comprenant de 1 à 30 atome de carbone, de préférence de 1 à 10 atomes de carbone, et $Z^3$ étant un groupe précurseur d'un groupe $Z^1$ ou $Z^2$ tel que mentionné ci-dessus ; -n est un entier allant de 1 à 3.

Un précurseur répondant à cette définition donnée ci-dessus peut être le mercaptopropyltriéthoxysilane de formule $HS-(CH_2)_3-Si(OCH_2CH_3)_3$ et le précondensat est un précondensat pour lequel M est Si et X est un groupe de formule -OR', R' étant tel que défini ci-dessus, tel qu'un précondensat du type polytétraméthoxysilane.
Le polymère fluoré peut être un copolymère de fluorure de vinylidène et d'hexafluoropropène.
Les matériaux obtenus selon l'invention peuvent se présenter sous différentes formes, tels que des films, des joncs, des granulés.
Ces matériaux, de par les caractéristiques du procédé, peuvent présenter les avantages suivants :

- si souhaité, une forte proportion de particules inorganiques échangeuses d'ions dans la matrice polymérique (par, exemple, une proportion pouvant être supérieure à 40% massique), permettant ainsi d'atteindre d'excellentes propriétés échangeuses d'ions qui ne sont plus tributaires du choix du ou des polymères ;
- un matériau homogène quant à la distribution desdites particules au sein du matériau et ainsi des propriétés échangeuses d'ions homogènes au sein de ce matériau ;
- un matériau dont les propriétés mécaniques de la matrice sont peu ou pas amoindries par la présence des particules inorganiques, ce qui peut s'expliquer, sans être lié par la théorie, que les particules ne s'organisent pas en domaines percolés du fait qu'elles sont réalisées *in situ* au sein même de la matrice.

Le procédé de l'invention peut s'appliquer à de larges domaines d'applications, dès lors que ces domaines impliquent l'utilisation de matériaux échangeurs d'ions.
Ainsi, le procédé de l'invention peut s'appliquer, par exemple, aux domaines suivants :

*le domaine de l'électrochimie, tel que :

- les piles à combustible, par exemple, les piles à combustible fonctionnant avec $H_2$/air ou $H_2/O_2$ (connues sous l'abréviation PEMFC pour « Proton Exchange Membrane Fuel Cell ») ou fonctionnant au méthanol/air (connues sous l'abréviation DMFC pour « Direct Methanol Fuel Cell »), lesdits matériaux conçus par ce procédé pouvant entrer dans la constitution de membranes échangeuses de protons ;

- les batteries au lithium, lesdits matériaux conçus par ce procédé pouvant entrer dans la constitution des électrolytes ;

*le domaine de la purification, tel que le traitement d'effluents ; et
*le domaine de l'électrochromisme.

Ainsi, le procédé de l'invention peut être destiné à la préparation de membranes de pile à combustible, destinées à être insérées dans un dispositif de pile à combustible au sein d'un assemblage électrode-membrane-électrode.
Ces membranes se présentent avantageusement sous la forme de films minces, ayant, par exemple, une épaisseur de 20 à 200 micromètres.
Pour préparer un tel assemblage, la membrane peut être placée entre deux électrodes, par exemple en tissu ou en papier de carbone imprégné d'un catalyseur. L'ensemble formé de la membrane disposée entre les deux électrodes est ensuite pressé à une température adéquate afin d'obtenir une bonne adhésion électrode-membrane.
L'assemblage électrode-membrane-électrode est ensuite placé entre deux plaques assurant la conduction électrique et l'alimentation en réactifs aux électrodes. Ces plaques sont communément désignées par le terme de plaques bipolaires
L'invention va, à présente, être décrite en référence aux exemples suivants donnés à titre illustratif et non limitatif.

**BRÈVE DESCRIPTION DES DESSINS**

La figure unique représente un diagramme de Nyquist pour différents matériaux préparés selon l'exemple 2.

**EXPOSÉ DÉTAILLÉ DE MODES DE RÉALISATION PARTICULIERS**

EXEMPLE 1

Dans une micro-extrudeuse fournie par DSM dotée de deux vis coniques et d'une filière plate, sont incorporés progressivement C g d'un copolymère poly(fluorure de vinylidène-co-hexafluoropropène) (symbolisé ci-après PVDF-HFP) ainsi que (A+B) g d'un mélange de précurseurs inorganiques composé de mercaptopropyltriéthoxysilane [$HS-(CH_2)_3-Si(OEt)_3$], Et signifiant un groupe éthyle, de masse molaire 238,42 $g.mol^{-1}$ et d'un précondensat de polytétraméthoxysilane comprenant des unités répétitives suivantes $-[(Si(OMe)_2)_n]-$ de masse molaire 106,2 $g.mol^{-1}$, Me signifiant un groupe méthyle.
Le mélange est réalisé à 190°C pendant 15 minutes avec une vitesse de vis de 100 tours/min. Le matériau est ensuite extrait en sortie à l'aide d'une micro-calandreuse fournie également par DSM. Au final, un film de matériau hybride avec une épaisseur comprise entre 20 et 100 $\mu$m est récupéré.
Plusieurs essais ont été réalisés avec différentes proportions de mercaptopropyltriéthylsilane (dénommé ci-après « mercapto-SH ») et de précondensat de polytétraméthoxysilane (dénommé ci-après uniquement « précondensat ») dans le mélange susmentionné.
Le tableau ci-dessous regroupe les différentes proportions de mercaptopropyltriéthylsilane, de précondensat de tétraméthoxysilane et de copolymère mises en oeuvre pour les différents essais.

| PVDF-HFP | | Mercapto-SH | | Précondensat | |
|---|---|---|---|---|---|
| Masse C (en g) | % Massique | Masse A (en g) | % massique | Masse B (en g) | % massique |
| 15 | 100 | 0 | 0 | 0 | 0 |
| 9 | 64,3 | 4,2 | 30 | 0, 8 | 5,7 |
| 10 | 66, 6 | 3,5 | 23,4 | 1,5 | 10 |

Notons que, au cours de la réaction d'hydrolyse-condensation qui résulte du chauffage dans l'extrudeuse, les groupements $-O-CH_2-CH_3$ et $-OCH_3$ sont transformés en alcool et les groupe -Si-OH formés se condensent pour former des particules inorganiques. Il subsiste alors des particules inorganiques fonctionnelles de silice greffées par des groupes $HS-CH_2-CH_2-CH_2-$ (issues des réactions d'hydrolyse-condensation du composé mercaptopropyltriéthoxysilane) et des particules de silice non fonctionnelles $SiO_2$ (issues des réactions d'hydrolyse-condensation du précondensat).
Le tableau ci-dessous décrit les caractéristiques du matériau en terme de pourcentages massiques de fonction -SH, de particules inorganiques fonctionnelles telles que mentionnées ci-dessus et de particules de silice non fonctionnelles telles que mentionnées ci-dessus.

| PVDF-HFP | Fonction -SH | | Particules inorganiques non fonctionnelles | | Particules inorganiques fonctionnelles | |
|---|---|---|---|---|---|---|
| Masse (en g) | Masse (en g) | % massique | Masse (en g) | % massique | Masse (en g) | % massique |
| 15 | 0 | 0 | 0 | 0 | 0 | 0 |
| 9 | 2,2 | 19,1 | 1,4 | 13,2 | 2,7 | 23 |
| 10 | 1, 9 | 14,7 | 1, 6 | 13, 9 | 2,7 | 21,3 |

La masse de fonction SH correspond à la masse de $HS-CH_2-CH_2-CH_2-SiO_{3/2}$ créé après réaction d'hydrolyse-condensation du mercaptopropyltriéthoxysilane, c'est-à-dire correspond à (A*127/238,42), A correspondant à la masse de mercaptopropyltriéthoxysilane susmentionné, 127 correspondant à la masse molaire de $HS-CH_2-CH_2-CH_2-SiO_{3/2}$ et 238,42 correspondant à la masse molaire de mercaptopropyltriéthoxysilane.

Le pourcentage massique de fonction -SH est un pourcentage massique de SH par rapport à la masse totale du matériau final. Ce pourcentage massique, après considération des réactions d'hydrolyse-condensation, est évalué par la formule suivante :

% = (A*127/238,42)/[(A*127/238,42)+(B*60/106,2)+C] *100

où :

*A, B et C correspondent respectivement aux masses de mercaptopropyltriéthoxysilane (masse molaire de 238,42), de précondensat (masse molaire de 106,2) et de PVDF-HFP ; et
*60 correspond à la masse molaire de $SiO_2$ issu de l'hydrolyse-condensation du précondensat.

La masse et le pourcentage massique de particules inorganiques fonctionnelles sont déterminés de la manière suivante.

Masse= (A*127/238,42) + (B*60/106,2)

%= [(A*127/238,42 + B*60/106,2)]/[(A*127/238,42)+(B*60/106,2)+C]*100

La masse et le pourcentage massique de particules inorganiques non fonctionnelles sont déterminés de la manière suivante.

Masse= (A*52/238,42) + (B*60/106,2)

%= [(A*52/238,42 + B*60/106,2)]/[(A*52/238,42)+(B*60/106,2)+C]*100

52 correspondant à la masse molaire de $SiO_{3/2}$ provenant des réactions d'hydrolyse-condensation du composé mercaptopropyltriéthoxysilane.

Les films obtenus présentent de fortes proportions de particules inorganiques.

<u>EXEMPLE 2</u>

Cette étape illustre la préparation de différents matériaux conformes à l'invention comportant, avant l'introduction dans l'extrudeuse, une étape de pré-hydrolyse des précurseurs.

Le protocole opératoire général de cette étape de pré-hydrolyse est le suivant.

x g d'éthanol puis y g d'une solution à $10^{-2}$ N d'acide chlorhydrique sont additionnés consécutivement à un précédent mélange de A g de mercaptopropyltriéthoxysilane [$HS-(CH_2)_3-Si(OEt)_3$] et B g d'un précondensat de tétraméthoxysilane (commercialisé par ABCR). Après un temps de réaction de 10 heures à température ambiante, le mélange de précurseurs est utilisé (appelé par la suite, hydrolysat) pour l'étape d'extrusion avec le polymère PVDF-HFP.

Les conditions opératoires de l'étape de pré-hydrolyse pour les différents essais mis en oeuvre sont énoncées dans le tableau ci-dessous.

| Essai | A (en g) | B (en g) | x et y (en g) |
|---|---|---|---|
| 1 | 10 | 5 | 2,1 |
| 2 | 15 | 5 | 2, 65 |
| 3 | 15 | 10 | 4 |
| 4 | 7,5 | 2 | 1,5 |

Les différents hydrolysats obtenus de ces essais sont ensuite mis en oeuvre pour former, selon le procédé de l'invention, des matériaux composites comportant des particules inorganiques fonctionnalisées.

Le protocole opératoire est le suivant :

Dans une micro-extrudeuse fournie par DSM dotée de deux vis coniques et d'une filière plate, sont incorporés progressivement 15 g d'un copolymère poly(fluorure de vinylidène-co-hexafluoropropène) ainsi que les hydrolysats préparés préalablement, dont les caractéristiques en termes d'ingrédients figurent dans le tableau ci-dessus.

Le mélange est réalisé à 190°C pendant 15 minutes avec une vitesse de vis de 100 tours/min. Le matériau est ensuite extrait en sortie à l'aide d'une micro-calandreuse fournie également par DSM. Au final, un film de matériau hybride avec une épaisseur comprise entre 20 et 100 $\mu$m est récupéré.

Le tableau ci-dessous regroupe les différentes proportions (en % massique par rapport à la masse totale du mélange) de mercaptopropyltriéthylsilane, de précondensat de tétraméthoxysilane et de copolymère mises en oeuvre pour les différents essais.

| Essai | PVDF-HFP | | Composé mercapto-SH | | Précondensat | |
|---|---|---|---|---|---|---|
| | Masse (en g) | % massique | Masse (en g) | % massique | Masse (en g) | % massique |
| 1 | 15 | 50 | 10 | 33,3 | 5 | 16,7 |
| 2 | 15 | 42,8 | 15 | 42,9 | 5 | 14,3 |
| 3 | 15 | 37,5 | 15 | 37,5 | 10 | 25 |
| 4 | 15 | 61,2 | 7,5 | 30, 6 | 2 | 8,2 |

Le tableau ci-dessous regroupe les caractéristiques du matériau en terme de pourcentages massiques de fonction -SH, de particules inorganiques fonctionnelles telles que mentionnées ci-dessus et de particules de silice non fonctionnelles.

| Essai | Fonction -SH | | Particules inorganiques non fonctionnelles | | Particules inorganiques fonctionnelles | |
|---|---|---|---|---|---|---|
| | Masse (en g) | % massique | Masse (en g) | % massique | Masse (en g) | % massique |
| 1 | 5,3 | 23 | 5 | 25 | 8,2 | 35,2 |
| 2 | 8 | 31 | 6,1 | 28,9 | 10,8 | 41,9 |
| 3 | 8 | 27,9 | 8,9 | 37,3 | 13,6 | 47,6 |
| 4 | 4 | 19,9 | 2,8 | 15,6 | 5,1 | 25,5 |

Les masses et % massiques susmentionnés sont déterminés de la même manière que dans l'exemple 1 ci-dessus.

Les propriétés rhéologiques de films obtenus à partir des matériaux susmentionnés ont été évaluées par un rhéomètre RSA II fourni par Rheometrics. Les modules élastiques E' ont été déterminés par mesure en mode flexion sur des éprouvettes rectangulaires de 1*3 cm. Le tableau ci-dessous regroupe les caractéristiques dimensionnelles des films testés ainsi que leurs caractéristiques rhéologiques. Ces films sont identifiés, dans le tableau ci-dessous, par le % de fonction -SH mentionné dans le tableau ci-dessus.

| Film | Epaisseur (en $\mu$m) | Module E' |
|---|---|---|
| 0 | 50 | $5,3*10^8$ |
| 31,0 | 150 | $4,4*10^8$ |
| 27,9 | 450 | $5,2*10^8$ |
| 19, 9 | 160 | $5,0*10^8$ |

Les résultats indiqués dans le tableau ci-dessus montrent que l'introduction d'une phase organique dans la matrice PVDF-HFP n'induit pas de modifications profondes des propriétés mécaniques de la matrice.

Pour tester la possibilité d'appliquer les matériaux obtenus conformément au procédé de l'invention comme membrane de pile à combustible, il a été procédé à la transformation chimique des fonctions -SH en $-SO_3H$.

Pour ce faire, on traite les films susmentionnés par un premier traitement oxydant avec un bain comprenant de l'eau oxygénée $H_2O_2$ à 30% pendant 24 heures à température ambiante. Ensuite, le film subit une acidification par une solution d'acide sulfurique $H_2SO_4$ à 1N pendant 24 heures à température ambiante. Enfin, le film est rincé dans plusieurs bains d'eau distillée jusqu'à retour à un pH neutre. Le film est conservé soit dans l'eau distillée, soit à l'état sec par un séchage sous vide à 60°C pendant une nuit.

Les mesures de conductivité protonique sont déterminées par spectroscopie d'impédance complexe en utilisant un banc d'acquisition formé d'un analyseur de fréquence (Solartron SI 1260) couplé à une cellule de mesure munie de 2 électrodes de platine (dont la surface de l'électrode est de 0,5 $cm^2$. Les mesures sont réalisées dans de l'eau immergée et à température ambiante.

Si l'on considère les membranes comme des résistances pures, l'impédance complexe $Z(\omega)$ de la membrane correspond à la combinaison d'une partie réelle (Z') et imaginaire (Z") selon la formule suivante :

$$Z(\omega)=(U/I)=Z'+Z''=Re(Z) + Im(Z)$$

L'évolution de Z" en fonction de Z' est illustrée par le diagramme de Nyquist représenté sur la figure 1 associé à une représentation classique du circuit équivalent d'un électrolyte.

Lorsque l'on compare l'évolution du diagramme de Nyquist Z" (en $\Omega$) en fonction de Z' (en $\Omega$) de la matrice PVDF-HFP seule (courbe a) avec celui des membranes obtenues conformément au procédé de l'invention (respectivement courbe b pour le film 23, courbe c pour le film 31, courbe d pour le film 27,9 et courbe e pour le film 19,9), on constate une réduction importante de la taille des demi-cercles dans le cas des membranes obtenues par le procédé de l'invention par rapport à la matrice PVDF-HFP seule est caractéristique des capacités accrues de conduction protonique au sein du matériau. Ces résultats démontrent que des charges inorganiques conductrices ont été introduites dans la matrice polymérique.

## Revendications

1. Procédé de préparation d'un matériau composite comprenant une matrice polymérique et une charge consistant en des particules inorganiques échangeuses d'ions comprenant une étape de synthèse in situ desdites particules au sein de la matrice polymérique, ladite étape de synthèse *in situ* étant réalisée par la méthode sol-gel et comprenant les opérations suivantes :

   - une opération de mise en contact du ou des polymères constitutifs de la matrice avec un ou plusieurs précurseurs des particules inorganiques, le ou lesdits précurseurs répondant à la formule suivante :

   $$(X)_{y-n}\text{-}M\text{-}(R)_n$$

   dans laquelle :

*M est un élément métallique ou un élément métalloïde ;
*X est un groupe chimique hydrolysable ;
*R est un groupe chimique échangeur d'ions ou un groupe précurseur d'un groupe chimique échangeur d'ions ;
*y correspond à la valence de l'élément M ; et
*n est un entier allant de 0 à (y-1) ;

- une opération d'hydrolyse-condensation du ou desdits précurseurs, moyennant quoi l'on obtient des particules inorganiques résultant de l'hydrolyse-condensation desdits précurseurs ;
- dans le cas où R est un groupe précurseur d'un groupe chimique échangeur d'ions, une opération de transformation du groupe précurseur en un groupe chimique échangeur d'ions ou, dans le cas où n=0, une opération de fonctionnalisation desdites particules par des groupes chimiques échangeurs d'ions.

**2.** Procédé de préparation d'un matériau composite comprenant une matrice polymérique et une charge consistant en des particules inorganiques échangeuses d'ions comprenant une étape de synthèse in situ desdites particules au sein de la matrice polymérique, ladite étape de synthèse *in situ* étant réalisée par la méthode sol-gel et comprenant les opérations suivantes :

- une opération d'hydrolyse d'un ou plusieurs précurseurs de particules inorganiques de formule suivante :

$$(X)_{y-n}\text{-M-}(R)_n$$

dans laquelle :

*M est un élément métallique ou un élément métalloïde ;
*X est un groupe chimique hydrolysable ;
*R est un groupe chimique échangeur d'ions ou un groupe précurseur d'un groupe chimique échangeur d'ions ;
*y correspond à la valence de l'élément M ; et
*n est un entier allant de 0 à (y-1) ;

- une opération de mise en contact de l'hydrolysat obtenu à l'étape précédente avec le ou les polymères constitutifs de la matrice ;
- une opération de chauffage du mélange résultant à une température efficace pour engendrer une transformation de l'hydrolysat en particules inorganiques ;
- dans le cas où R est un groupe précurseur d'un groupe chimique échangeur d'ions, une opération de transformation du groupe précurseur en un groupe chimique échangeur d'ions ou, dans le cas où n=0, une opération de fonctionnalisation desdites particules par des groupes chimiques échangeurs d'ions.

**3.** Procédé selon la revendication 1 ou 2, dans lequel M est du silicium, du titane ou de l'aluminium.

**4.** Procédé selon l'une quelconque des revendications 1 à 3, dans lequel X est un groupe -OR' ou un atome d'halogène, R' représentant un groupe alkyle.

**5.** Procédé selon l'une quelconque des revendications 1 à 4, dans lequel R est un groupe échangeur de cations de formule $-R^2-Z^1$, dans laquelle :

- $R^2$ est une liaison simple, un groupe alkylène, linéaire ou ramifié, ou un groupe hydrocarboné cyclique ;
- $Z^1$ est un groupe $-SO_3H$, $-PO_3H_2$, $-CO_2H$, éventuellement sous forme de sels.

**6.** Procédé selon l'une quelconque des revendications 1 à 4, dans lequel R est un groupe de formule $-R^2-Z^3$, dans laquelle :

- $R^2$ est une liaison simple, un groupe alkylène, linéaire ou ramifié, ou un groupe hydrocarboné cyclique ;
- $Z^3$ est un groupe précurseur d'un groupe $Z^1$ tel que défini à la revendication 5.

**7.** Procédé selon la revendication 6, dans lequel le précurseur est un précurseur de formule suivante :

$(OR')_{4-n}\text{-Si-}(R)_n$

dans laquelle :

- R' est tel que défini à la revendication 4;
- R correspond à la formule $-R^2-Z^3$, $R^2$ étant un groupe alkylène, linéaire ou ramifié, comprenant de 1 à 30 atomes de carbone et $Z^3$ étant un groupe précurseur d'un groupe $Z^1$ tel que défini à la revendication 5 ;
- n est un entier allant de 1 à 3.

**8.** Procédé selon la revendication 7, dans lequel le précurseur est le mercaptopropyltriéthoxysilane de formule :

$HS\text{-}(CH_2)_3\text{-}Si(OCH_2CH_3)_3$

**9.** Procédé selon l'une quelconque des revendications 1 à 8, dans lequel le précurseur est utilisé en combinaison avec un précondensat comprenant des unités répétitives de formule suivante :

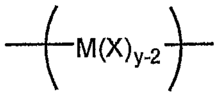

dans laquelle :

- M est un élément métallique ou métalloïde tel que défini à la revendication 1 ou 2;
- X est un groupe tel que défini à la revendication 1 ou 2;
- y correspond à la valence de l'élément M.

**10.** Procédé selon l'une quelconque des revendications précédentes, dans le ou les polymères constitutifs de la matrice sont choisis parmi les polymères thermoplastiques fluorés.

**11.** Procédé selon la revendication 10, dans lequel les polymères thermoplastiques fluorés sont des polymères non échangeurs d'ions choisis parmi les polytétrafluoréthylènes (connu sous l'abréviation PTFE), les polyfluorures de vinylidène (connu sous l'abréviation PVDF), les copolymères d'éthylène fluorépropylène (connu sous l'abréviation FEP), les copolymères d'éthylène et de tétrafluoroéthylène (connu sous l'abréviation ETFE), les copolymère de fluorure de vinylidène et d'hexafluoropropène (connu sous l'abréviation PVDF-HFP) et les mélanges de ceux-ci.

**12.** Procédé selon la revendication 10, dans lequel les polymères thermoplastiques fluorés sont des polymères échangeurs d'ions choisis parmi les polymères perfluorés sulfonés.

**13.** Procédé selon l'une quelconque des revendications précédentes, dans lequel l'étape de synthèse *in situ* est réalisée par extrusion.

## Patentansprüche

**1.** Verfahren zur Herstellung eines Verbundmaterials, enthaltend eine Polymermatrix und einen Füllstoff, der aus anorganischen Ionenaustauscher-Partikeln besteht, umfassend einen Schritt der *in situ*-Synthese der Partikel innerhalb der Polymermatrix, wobei der Schritt der *in situ*-Synthese durch das Sol-Gel-Verfahren erfolgt und die nachfolgenden Vorgänge umfasst:

- einen Vorgang des Inkontaktbringens des bzw. der die Matrix bildenden Polymers/Polymere mit einem oder mehreren Vorläufern der anorganischen Partikel, wobei der bzw. die Vorläufer der nachfolgenden Formel entsprechen:

$(X)_{y-n}\text{-M-}(R)_n$

worin:

*M ein Metallelement oder ein Metalloidelement ist;
*X eine hydrolisierbare chemische Gruppe ist;
*R eine chemische Ionenaustauscher-Gruppe oder eine Vorläufergruppe einer chemischen Ionenaustauscher-Gruppe ist;
*y der Wertigkeit des Elements M entspricht; und
*n eine ganze Zahl von 0 bis (y-1) ist;

- einen Vorgang der Hydrolyse-Kondensation des bzw. der Vorläufer, wodurch anorganische Partikel erhalten werden, die sich aus der Hydrolyse-Kondensation der Vorläufer ergeben;
- im Falle, dass R eine Vorläufergruppe einer chemischen Ionenaustauscher-Gruppe ist, einen Vorgang der Umwandlung der Vorläufergruppe in eine chemische Ionenaustauscher-Gruppe, und im Falle, dass n=0 ist, einen Vorgang der Funktionalisierung der Partikel durch chemische Ionenaustauscher-Gruppen.

**2.** Verfahren zur Herstellung eines Verbundmaterials, enthaltend eine Polymermatrix und einen Füllstoff, der aus anorganischen Ionenaustauscher-Partikeln besteht, umfassend einen Schritt der *in situ*-Synthese der Partikel innerhalb der Polymermatrix, wobei der Schritt der *in situ*-Synthese durch das Sol-Gel-Verfahren erfolgt und die nachfolgenden Vorgänge umfasst:

- einen Vorgang der Hydrolyse eines oder mehrerer Vorläufer anorganischer Partikel der nachfolgenden Formel:

$$(X)_{y-n}\text{-M-}(R)_n$$

worin:

*M ein Metallelement oder ein Metalloidelement ist;
*X eine hydrolisierbare chemische Gruppe ist;
*R eine chemische Ionenaustauscher-Gruppe oder eine Vorläufergruppe einer chemischen Ionenaustauscher-Gruppe ist;
*y der Wertigkeit des Elements M entspricht; und
*n eine ganze Zahl von 0 bis (y-1) ist;

- einen Vorgang des Inkontaktbringens des im vorherigen Schritt gewonnenen Hydrolysats mit dem bzw. den die Matrix bildenden Polymers/Polymeren;
- einen Vorgang des Erhitzens des sich ergebenden Gemischs auf eine Wirktemperatur, um eine Umwandlung des Hydrolysats in anorganische Partikel zu bewirken;
- im Falle, dass R eine Vorläufergruppe einer chemischen Ionenaustauscher-Gruppe ist, einen Vorgang der Umwandlung der Vorläufergruppe in eine chemische Ionenaustauscher-Gruppe, und im Falle, dass n=0 ist, einen Vorgang der Funktionalisierung der Partikel durch chemische Ionenaustauscher-Gruppen.

**3.** Verfahren nach Anspruch 1 oder 2, wobei M Silicium, Titan oder Aluminium ist.

**4.** Verfahren nach einem der Ansprüche 1 bis 3, wobei X eine -OR'- Gruppe oder ein Halogenatom ist, wobei R' eine Alkyl-Gruppe darstellt.

**5.** Verfahren nach einem der Ansprüche 1 bis 4, wobei R eine Kationenaustauscher-Gruppe der Formel $-R^2-Z^1$ ist, worin

- $R^2$ eine Einfachbindung, eine lineare oder verzweigte Alkylengruppe oder eine zyklische Kohlenwasserstoffgruppe ist;
- $Z^1$ eine $-SO_3H$-, $-PO_3H_2$, $-CO_2H$-Gruppe, gegebenenfalls in Form von Salzen, ist.

**6.** Verfahren nach einem der Ansprüche 1 bis 4, wobei R eine Gruppe der Formel $-R^2-Z^3$ ist, worin

- $R^2$ eine Einfachbindung, eine lineare oder verzweigte Alkylengruppe ist oder eine zyklische Kohlenwasserstoffgruppe ist;
- $Z^3$ eine Vorläufergruppe einer Gruppe $Z^1$ ist, wie sie in Anspruch 5 definiert ist.

**7.** Verfahren nach Anspruch 6, wobei der Vorläufer ein Vorläufer der nachfolgenden Formel ist:

$(OR')_{4-n}-Si(R)_n$

worin

- R' wie in Anspruch 4 definiert ist;
- R der Formel $-R^2-Z^3$ entspricht, wobei $R^2$ eine lineare oder verzweigte Alkylengruppe mit 1 bis 30 Kohlenstoffatomen ist und $Z^3$ eine Vorläufergruppe einer Gruppe $Z^1$ ist, wie sie in Anspruch 5 definiert ist,
- n eine ganze Zahl von 1 bis 3 ist.

**8.** Verfahren nach Anspruch 7, wobei der Vorläufer Mercaptopropyltriethoxysilan der nachfolgenden Formel ist:

$HS-(CH_2)_3-Si(OCH_2CH_3)_3$

**9.** Verfahren nach einem der Ansprüche 1 bis 8, wobei der Vorläufer in Kombination mit einem Vorkondensat verwendet wird, das Wiederholungseinheiten der nachfolgenden Formel enthält:

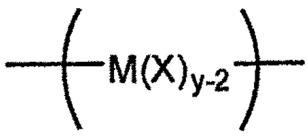

worin:

- M ein Metallelement oder ein Metalloidelement wie in Anspruch 1 oder 2 definiert ist;
- X eine Gruppe wie in Anspruch 1 oder 2 definiert ist;
- y der Wertigkeit des Elements M entspricht.

**10.** Verfahren nach einem der vorangehenden Ansprüche, wobei das bzw. die Polymere, die die Matrix bilden, ausgewählt sind aus fluorhaltigen, thermoplastischen Polymeren.

**11.** Verfahren nach Anspruch 10, wobei die fluorhaltigen, thermoplastischen Polymere nicht ionenaustauschende Polymere sind, die ausgewählt sind aus Polytetrafluorethylenen (bekannt unter der Abkürzung PTFE), Polyvinylidenfluoriden (bekannt unter der Abkürzung PVDF), fluorierten Ethylen-Propylen-Copolymeren (bekannt unter der Abkürzung FEP), Copolymeren aus Ethylen und Tetrafluorethylen (bekannt unter der Abkürzung ETFE), Copolymere aus Vinylidenfluorid und Hexafluorpropen (bekannt unter der Abkürzung PVDF-HFP) und deren Gemische.

**12.** Verfahren nach Anspruch 10, wobei die fluorhaltigen, thermoplastischen Polymere nicht ionenaustauschende Polymere sind, die ausgewählt sind aus sulfonierten, perfluorierten Polymeren.

**13.** Verfahren nach einem der vorangehenden Ansprüche, wobei der Schritt der *in situ*-Synthese durch Extrusion erfolgt.

## Claims

**1.** A method for preparing a composite material comprising a polymeric matrix and a filler consisting in ion exchange inorganic particles comprising a step for synthesis *in situ* of said particles within the polymeric matrix, said step for synthesis *in situ* being carried out with the sol-gel method and comprising the following operations:

- an operation for putting the constitutive polymer(s) of the matrix in contact with one or more precursors of the inorganic particles, said precursor(s) fitting the following formula:

$(X)_{y-n}-M-(R)_n$

wherein:

*M is a metal element or a metalloid element;
*X is a hydrolyzable chemical group;

*R is a chemical exchange group or a precursor group of an ion exchange chemical group;
*y corresponds to the valence of the element M; and
*n is an integer ranging from 0 to (y-1);

- an operation for hydrolysis-condensation of said precursor(s), by means of which inorganic particles are obtained resulting from the hydrolysis-condensation of said precursors;
- in the case when R is a precursor group of an ion exchange chemical group, an operation for transforming the precursor group into an ion exchange chemical group or, in the case when n = 0, an operation for functionalizing said particles with ion exchange chemical groups.

**2.** A method for preparing a composite material comprising a polymeric matrix and a filler consisting in ion exchange inorganic particles comprising a step for synthesis *in situ* of said particles within the polymeric matrix, said step for synthesis *in situ* being carried out with the sol-gel method and comprising the following operations:

- an operation for hydrolysis of one or more precursors of inorganic particles of the following formula:

$$(X)_{y-n}\text{-M-}(R)_n$$

wherein:

*M is a metal element or a metalloid element;
*X is a hydrolyzable chemical group;
*R is an ion exchange chemical group or a precursor group of an ion exchange chemical group;
*y corresponds to the valence of the element M; and
*n is an integer ranging from 0 to (y-1);

- an operation for putting the hydrolyzate obtained in the preceding step in contact with the constitutive polymer(s) of the matrix;
- an operation for heating the resulting mixture to an effective temperature in order to generate a transformation of the hydrolyzate into inorganic particles;
- in the case when R is a precursor group of an ion exchange chemical group, an operation for transforming the precursor group into an ion exchange chemical group or, in the case when n = 0, an operation for functionalizing said particles with ion exchange chemical groups.

**3.** The method according to claim 1 or 2, wherein M is silicon, titanium or aluminium.

**4.** The method according to any one of claims 1 to 3, wherein X is an -OR' group or a halogen atom, R' representing an alkyl group.

**5.** The method according to any one of claims 1 to 4, wherein R is a cation exchange group of formula $-R^2-Z^1$, wherein:

- $R^2$ is a simple bond, a linear or branched alkylene group or a cyclic hydrocarbon group;
- $Z^1$ is an $-SO_3H$, $-PO_3H_2$, $-CO_2H$ group, optionally as salts.

**6.** The method according to any one of claims 1 to 4, wherein R is a group of formula $-R^2-Z^3$, wherein:

- $R^2$ is a simple bond, a linear or branched alkylene group, or a cyclic hydrocarbon group;
- $Z^3$ is a precursor group of a group $Z^1$ as defined in claim 5.

**7.** The method according to claim 6, wherein the precursor is a precursor of the following formula:

$$(OR')_{4-n}\text{-Si-}(R)_n$$

wherein:

- R' is as defined in claim 4;
- R corresponds to the formula $-R^2-Z^3$, $R^2$ being a linear or branched alkylene group comprising from 1 to 30 carbon atoms and $Z^3$ being a precursor group of a group $Z^1$ as defined in claim 5;

- n is an integer ranging from 1 to 3.

**8.** The method according to claim 7, wherein the precursor is the mercaptopropyl-triethoxysilane of formula:

$$HS\text{-}(CH_2)_3\text{-}Si(OCH_2CH_3)_3$$

**9.** The method according to any one of claims 1 to 8, wherein the precursor is used in combination with a precondensate comprising recurrent units of the following formula:

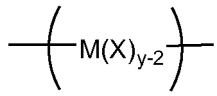

wherein:

- M is a metal or metalloid element as defined in claim 1 or 2;
- X is a group as defined in claim 1 or 2;
- y corresponds to the valence of the element M.

**10.** The method according to any of the preceding claims, wherein the constitutive polymer(s) of the matrix are selected from fluorinated thermoplastic polymers.

**11.** The method according to claim 10, wherein the fluorinated thermoplastic polymers are non-ion exchange polymers selected from polytetrafluorethylenes (known under the acronym of PTFE), polyvinylidene fluorides (known under the acronym of PVDF), fluorinated ethylene/propylene copolymers (known under the acronym of FEP), copolymers of ethylene and tetrafluoroethylene (known under the acronym of ETFE), copolymers of vinylidene fluoride and hexafluoropropene (known under the acronym of PVDF-HFP) and mixtures thereof.

**12.** The method according to claim 10, wherein the fluorinated thermoplastic polymers are ion exchange polymers selected from perfluorinated sulfonated polymers.

**13.** The method according to any of the preceding claims, wherein the step for synthesis *in situ* is carried out by extrusion.

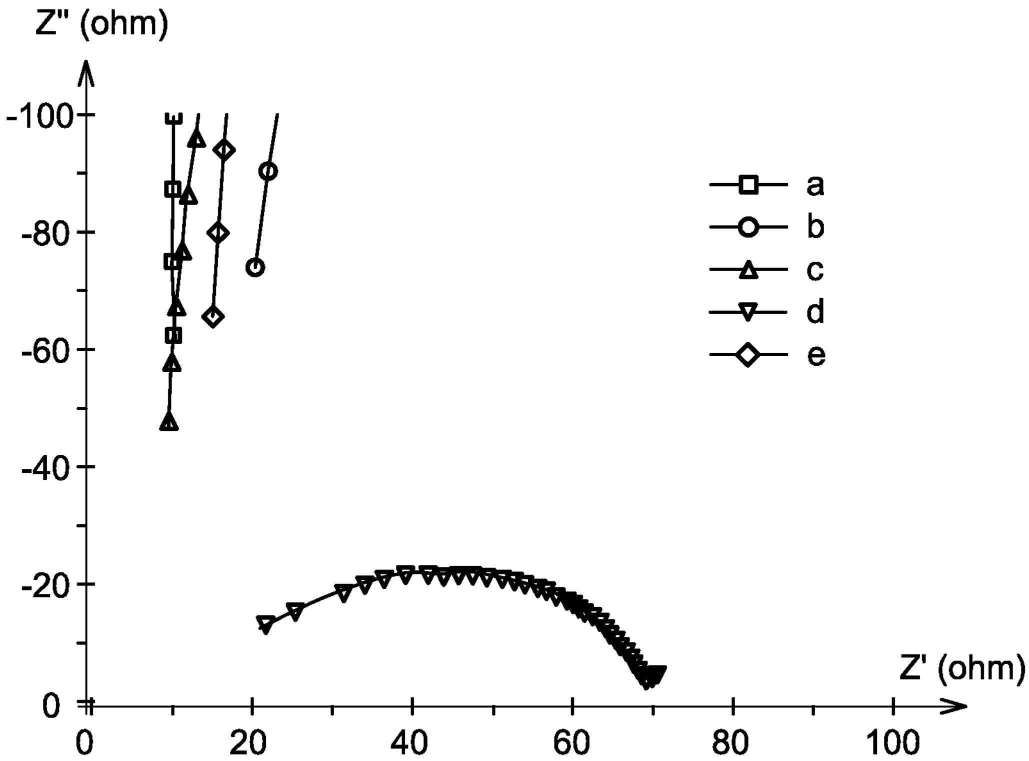


FIGURE UNIQUE

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2009000797 A